Europäisches Patentamt

European Patent Office

Office européen des brevets

(11) Veröffentlichungsnummer : **0 088 141**
B1

## (12) EUROPÄISCHE PATENTSCHRIFT

(45) Veröffentlichungstag der Patentschrift :
30.07.86

(21) Anmeldenummer : 82101889.2

(22) Anmeldetag : 10.03.82

(51) Int. Cl.⁴ : **A 21 B  1/40**, A 21 B  1/28

(54) **Verfahren zum Regeln der Wärmequelle eines Backofens mit Umwälzheizsystem und nach diesem Verfahren regelbarer Ofen.**

(43) Veröffentlichungstag der Anmeldung :
14.09.83 Patentblatt 83/37

(45) Bekanntmachung des Hinweises auf die Patenterteilung : 30.07.86 Patentblatt 86/31

(84) Benannte Vertragsstaaten :
DE FR IT NL

(56) Entgegenhaltungen :
DE-A- 2 351 072
DE-A- 2 952 398
GB-A- 1 429 482
US-A- 4 032 289
US-A- 4 245 613

(73) Patentinhaber : **Franz Daub u. Söhne GmbH u. Co.
Randstrasse 1
D-2000 Hamburg 54 (DE)**

(72) Erfinder : **Daub, Franz, Jun.
Ameisenkamp 27
D-2000 Hamburg 54 (DE)**

(74) Vertreter : **Glawe, Delfs, Moll & Partner Patentanwälte
Postfach 26 01 62 Liebherrstrasse 20
D-8000 München 26 (DE)**

**Beschreibung**

Die Erfindung bezieht sich auf ein Verfahren zum Regeln der Wärmequelle eines Backofens mit einem Umwälz-Heizsystem, dessen Umwälzweg vom Backraum über die Wärmequelle und ein Gebläse zurück zum Backraum führt, aufgrund einer Temperaturmessung im Umwälzweg vor dem Backraum. Die Erfindung bezieht sich ferner auf einen Backofen zur Durchführung dieses Verfahrens. Der Backofen ist insbesondere ein Stickenofen ; das ist ein Backschrank, in dessen Backraum ein mehretagiger Backwagen mit dem zu backenden Gut während des Backvorgangs ständig gedreht wird.

Auf den ersten Blick erscheint es ohne weiteres zweckentsprechend, daß die Backatmosphäre im Umwälzweg dem Backraum mit ständig gleicher Temperatur zugeführt wird. Deshalb ist bei bekannten Backöfen das die Temperaturregelung steuernde Thermometer im Umwälzweg vor dem Backraum angeordnet.

Jedoch hat sich gezeigt, daß trotz der temperaturkonstanten Zuführung der Backatmosphäre zum Backraum ungleiche Backergebnisse auftreten, wenn der Backraum unterschiedlich stark gefüllt oder unterschiedlich vorgeheizt ist. Es wurde gefunden, daß dies daran liegt, daß bei starker Backraumfüllung oder geringerer Vorwärmung, insbesondere zu Beginn des Backvorgangs, eine größere Wärmemenge an das Backgut bzw. die Backraumwandungen abgegeben wird und die Atmosphäre daher mit einer durchschnittlich geringeren Backtemperatur auf das Backgut einwirkt, als wenn der Backraum nur wenig gefüllt ist oder der Ofen schon längere Zeit in Betrieb ist und infolgedessen gut vorgeheizt ist.

Ferner ist es bekannt (Weber : « Messen, Regeln und Steuern in der Lüftungs- und Klimatechnik », Düsseldorf 1973, Seite 55 u. 56), bei der Regelung der Temperatur eines Zuschauerraums zwei in Kaskade geschaltete Regelkreise zu verwenden, von denen der erste auf der Messung der Raumtemperatur beruht und die Führungsgröße des zweiten Regelkreises bestimmt, der die Zulufttemperatur regelt. Dabei wird vorausgesetzt, daß die mittlere Raumtemperatur zutreffend durch einen Fühler ermittelt werden kann, was nur bei mäßiger Wärmebelastung denkbar ist. Die bei starker Wärmebelastung, insbesondere starker Backraumfüllung oder geringer Vorwärmung, auftretenden Probleme können damit nicht beseitigt werden. Der Erfindung liegt daher die Aufgabe zugrunde, ein Verfahren und einen Backofen der eingangs genannten Art zu schaffen, bei dem das Backergebnis weniger abhängig von dem Grad der Füllung und der Vorwärmung des Backraumes ist.

Die erfindungsgemäße Lösung besteht darin, daß die Temperaturen im Umwälzweg vor und hinter dem Backraum gemessen werden und ein zwischen den gemessenen Temperaturwerten gemittelter Wert der Regelung zugrundegelegt wird.

Der Backofen enthält ein weiteres Thermometer im Umwälzweg hinter dem Backraum, wobei ein zwischen den Temperaturen beider Thermometer gemittelter Temperaturwert der Regelung zugrundeliegt.

Der Erfindung liegt die Erkenntnis zugrunde, daß die bisherige Annahme, daß man die Backatmosphäre mit ständig gleicher Temperatur dem Gut zuführen müßte, unrichtig ist und daß es erforderlich ist, die Zuführungstemperatur bei starker Backraumfüllung im Unterschied zu geringerer Backraumfüllung zu erhöhen. Jedoch wäre es außerordentlich kompliziert, die Backraumfüllung als solche in die Regelung einzuführen. Statt dessen bringt die Erfindung die Backraumfüllung mittelbar zur Einwirkung, indem sie auf dem Wege über das in dem Backraum nachgeschaltete Thermometer die von der Backraumfüllung abhängige Temperaturabsenkung in die Regelung einfließen läßt.

Im allgemeinen ist es völlig ausreichend, wenn der arithmetische Mittelwert zwischen den beiden Temperaturen der Regelung zugrundegelegt wird. Jedoch können bei der im Anspruch genannten Mittelung der beiden Temperaturen auch andere Gesichtspunkte zugrundegelegt werden. Ferner schließt die Erfindung nicht aus, daß auch noch an anderer Stelle des Umwälzwegs gemessene Temperaturen Einfluß auf die Regelung haben.

Das Anspruchsmerkmal, daß die Thermometer vor bzw. hinter dem Backraum angeordnet sind, ist dahingehend auszulegen, daß die Temperatur der Backatmosphäre zu messen ist, bevor bzw. nachdem sie den wesentlichen Teil des Backraums durchströmt hat. Daraus geht hervor, daß der Anspruch nicht verlangt, daß die Thermometer außerhalb der räumlichen Begrenzung des Backraums liegen, obwohl dies im allgemeinen zweckmäßig ist.

Gewerbliche Backöfen der vorliegenden Art werden ausschließlich indirekt beheizt, nur daß die Wärmekapazität der Wärmetauscher dem System eine erwünschte Trägheit verleiht, so daß die Temperatur im Umwälzweg nicht sprunghaft auf das Ein- und Ausschalten des Brenners reagiert und der Brenner nicht unerwünscht häufig geschaltet werden muß. Direkte Beheizung kennt man nur für untergeordnete Zwecke, beispielsweise bei Haushaltsbacköfen, sowie bei kontinuierlich im Durchlauf betriebenen Öfen, in denen ständig konstante Temperaturverhältnisse aufgrund einmaliger Brennereinstellung beibehalten werden können. Wollte man einen Backofen mit Umwälz-Heizsystem direkt durch einen Brenner beheizen, so würde jede Änderung der Heizleistung des Brenners sich sofort bei dem vor dem Backraum angeordneten Thermometer auswirken, so daß dies unverzüglich und ohne Rücksicht auf die Vorgänge im Backraum eine gegensinnige Regelbeeinflussung des Brenners veranlassen würde. Dies gilt insbesondere für die bei den betrachteten Backöfen übliche ein/aus-Regelung des Brenners. Kaum wäre er eingeschaltet, so würde die Temperatur bei dem vor dem Backraum angeordneten Thermometer sprunghaft ansteigen, woraufhin wieder die Ausschaltung des Brenners veranlaßt würde, ohne daß die Temperaturverhältnisse im Backraum darauf einen Einfluß haben.

Diese Voraussetzungen ändern sich grundlegend bei Verwendung zweier Thermometer gemäß der Erfindung, weil das dem Backraum nachgeschaltete Thermometer die Zustände im Backraum spiegelt. Es hat sich daher gezeigt, daß die Erfindung die Verwendung eines unmittelbar im Umwälzweg angeordneten Brenners als Wärmequelle gestattet. Die Anwendung der erfindungsgemäßen Thermometeranordnung ist daher im Zusammenhang mit der unmittelbaren Brennerbeheizung des Umwälz-Heizsystems von besonderem Vorteil. Dies gilt insbesondere für eine grobstufige Regelung, insbesondere eine ein/aus-Regelung.

Als besonderer Vorteil der Erfindung sei noch erwähnt, daß sie von Beginn des Backprozesses an eine hohe Wärmeleistung im Backraum gewährleistet. Bei bekannten Öfen der betrachteten Art wird zu Beginn des Backprozesses der größte Teil der im Backraum zugeführten Wärme durch die Aufheizung der mit dem Backgut eingeschobenen Backvorrichtung (Backwagen) verbraucht, so daß nur eine verminderte Temperatur für das Backgut zur Verfügung steht. Der Bäcker muß daher oftmals zu Beginn des Backprozesses die Temperatur am Ofen höher einstellen als sie tatsächlich gewünscht wurde, um dadurch eine ausreichende Backleistung bei Beginn des Backprozesses sicherzustellen. Die erfindungsgemäße Anordnung berücksichtigt hingegen die starke Wärmeaufnahme des Backgeräts selbsttätig, weil die dadurch vermehrte Temperaturabsenkung im Backraum zu einer Verringerung des von dem Thermometer hinter dem Backraum gemessenen Temperaturwerts führt, so daß die Regelung veranlaßt wird, die Backatmosphäre mit um so höherer Temperatur dem Backraum zuzuführen.

Es gibt allerdings Backgut, das gerade zu Beginn des Backprozesses eine milde Wärmezufuhr verlangt, wie beispielsweise Schrippen. Damit diese auch mit dem erfindungsgemäßen Backofen einwandfrei gebacken werden können, kann es vorteilhaft sein, eine Einrichtung zur Verzögerung und/oder Verminderung der Heizleistung in der Anfangsbackzeit vorzusehen.

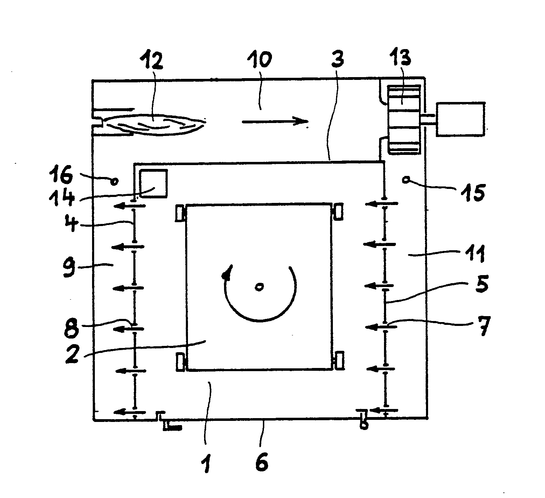

Die Erfindung wird im folgenden näher unter Bezugnahme auf die Zeichnung erläutert, die ein vorteilhaftes Ausführungsbeispiel veranschaulicht. Sie zeigt in einer Figur einen schematischen Horizontalschnitt durch einen Stickenofen.

Der Backraum 1 mit dem Stickenwagen 2, der während des Backvorgangs in Pfeilrichtung gedreht wird, wird eingeschlossen von den Wänden 3, 4, 5 und der Türwand 6. Die Wand 5 enthält Schlitze 7 zur Zufuhr der Backatmosphäre, während die Wand 4 Schlitze 8 zur Abführung derselben aufweist. Selbstverständlich können die Einrichtungen zur Zu- und Abführung der Backatmosphäre sowie auch der Backraum selbst in anderer Weise geformt sein.

An den Backraum schließt sich im Umwälzweg ein Kanal 9 an, der über den Kanal 10 und 11 zum Backraum zurückführt. Im Kanal 10 befindet sich ein Brenner 12, dessen Verbrennungsgase somit unmittelbar in die Backatmosphäre gelangen. Ein Gebläse 13 erzeugt die zur Umwälzung der Backatmosphäre erforderliche Druckdifferenz. Bei 14 ist ein Abluftkamin angedeutet, der vom Backraum ausgeht, damit dieser auf dem Druckniveau Null liegt. Jedoch ist er so angeordnet, daß die Backatmophäre ihn erst dann erreicht, wenn sie den Backraum bereits im wesentlichen durchströmt hat, damit nur Gas verhältnismäßig geringer Temperatur abgeführt wird. In den Kanälen 11 und 9 befinden sich Thermometer 15 bzw. 16 zur Messung der Temperatur der zugeführten bzw. abgeführten Backatmosphäre. Diese liegen beispielsweise in der Größenordnung von 260° bzw. 200°.

Es hat sich herausgestellt, daß der Brenner 12, der zweckmäßigerweise ein Gasbrenner ist, bei der erfindungsgemäßen Regelung etwa dreimal weniger häufig geschaltet wird, als wenn nur das Thermometer 15 auf der Zuführungsseite des Backraums vorhanden wäre. Der Backofen ist wegen des Wegfalls teurer Heizregister kleiner, leichter und billiger. Er arbeitet wirtschaftlicher als bekannte Öfen, weil nicht des noch verhältnismäßig hoch temperierte Verbrennungsgas als solche sondern die niedriger temperierte Backatmosphäre, nachdem sie den Backraum durchlaufen hat, durch den Kamin 14 abgeführt wird.

**Patentansprüche**

1. Verfahren zum Regeln der Wärmequelle eines Backofens, insbesondere Stickenofens, mit einem Umwälzheizsystem, dessen Umwälzung vom Backraum über der Wärmequelle und ein Gebläse zurück zum Backraum führt, aufgrund einer Temperaturmessung im Umwälzweg vor dem Backraum, dadurch gekennzeichnet, daß die Temperaturen im Umwälzweg vor und hinter dem Backraum gemessen werden und ein zwischen den gemessenen Temperaturwerten gemittelter Wert der Regelung zugrundegelegt wird.

2. Backofen, insbesondere Stickenofen, zur Durchführung des Verfahrens nach Anspruch 1, mit einem Umwälzheizsystem, dessen Umwälzweg vom Backraum (1) über eine Wärmequelle (12) und ein Gebläse (13) zurück zum Backraum führt, und mit einem Regelsystem zur Regelung der Heizwirkung der Wärmequelle, das ein im Umwälzweg vor dem Backraum angeordnetes Thermometer (15) umfaßt, dadurch gekennzeichnet, daß ein weiteres Thermometer (16) im Umwälzweg (9, 10, 11) hinter dem Backraum (1) angeordnet ist und ein zwischen den Temperaturen beider Thermometer (15, 16) gemittelter Temperaturwert der Regelung zugrundeliegt.

3. Backofen nach Anspruch 2, dadurch gekennzeichnet, daß die Wärmequelle (12) ein unmittelbar im Umwälzweg angeordneter Brenner ist.

4. Backofen nach Anspruch 3, dadurch gekennzeichnet, daß die Regelung grobstufig, insbesondere eine ein/aus-Regelung ist.

5. Backofen nach einem der Ansprüche 2-4, dadurch gekennzeichnet, daß eine Einrichtung zur Verzögerung und/oder Verminderung der Heizleistung in der Anfangsbackzeit vorgesehen ist.

## Claims

1. Process for controlling the heat source of a baking oven, in particular a rack-type oven, with a circulation heating system, the circulation of which leads from the baking chamber via the heat source and a blower back to the baking chamber, based on a temperature measurement in the circulation path upstream of the baking chamber characterized in that the temperatures in the circulation path upstream and downstream of the baking chamber are measured and a value averaged between the temperature values measured is used as a basis for control.

2. Baking oven, in particular a rack-type oven, for implementing the process according to Claim 1, with a circulation heating system, the circulation path of which leads from the baking chamber (1) via a heat source (12) and a blower (13) back to the baking chamber, and with a control system for controlling the heating effect of the heat source, which comprises a thermometer (15) arranged in the circulation path upstream of the baking chamber, characterized in that a further thermometer (16) is arranged in the circulation path (9, 10, 11) downstream of the baking chamber (1) and a temperature value averaged between the temperatures of the two thermometers (15, 16) is used as a basis for control.

3. Baking oven according to Claim 2, characterized in that the heat source (12) is a burner arranged directly in the circulation path.

4. Baking oven according to Claim 3, characterized in that the control is of coarse adjustment, in particular an on/off control.

5. Baking oven according to one of Claims 2-4, characterized in that a facility for delaying and/or reducing the heating output in the initial baking time is provided.

## Revendications

1. Procédé de régulation de la source de chaleur d'un four de cuisson, en particulier d'un four continu rotatif, à système de chauffage à circulation forcée dont le circuit, à partir de la zone de cuisson, passe par la source de chaleur et une soufflante avant de revenir à la zone de cuisson, sur la base d'une mesure de température dans le trajet de circulation en amont de la zone de cuisson, caractérisé en ce que les températures dans le trajet de circulation sont mesurées en amont et en aval de la zone de cuisson et la régulation est basée sur une valeur obtenue en calculant la moyenne entre les valeurs de température mesurées.

2. Four de cuisson, en particulier four continu rotatif, pour l'exécution du procédé selon la revendication 1, comportant un système de chauffage à circulation forcée dont le circuit, à partir de la zone de cuisson (1), passe par une source de chaleur (12) et une soufflante (13) avant de revenir à la zone de cuisson, ainsi qu'un système de réglage pour la régulation de l'effet chauffant de la source de chaleur, système qui comprend un thermomètre (15) disposé dans le trajet de circulation en amont de la zone de cuisson, caractérisé en ce qu'il est disposé un autre thermomètre (16) dans le trajet de circulation (9, 10, 11) en aval de la zone de cuisson (1) et la régulation est basée sur une valeur obtenue en calculant la moyenne entre les températures des deux thermomètres (15, 16).

3. Four de cuisson selon la revendication 2, caractérisé en ce que la source de chaleur (12) est un brûleur disposé directement dans le trajet de circulation.

4. Four de cuisson selon la revendication 3, caractérisé en ce que la régulation est une régulation par échelons grossiers, en particulier par tout ou rien.

5. Four de cuisson selon l'une quelconque des revendications 2 à 4, caractérisé en ce qu'il est prévu un dispositif pour retarder et/ou diminuer la puissance calorifique dans la période initiale de la cuisson.